# EUROPEAN PATENT APPLICATION

(11) **EP 3 627 019 A1**
(43) Date of publication of application: **25.03.2020**
(21) Application number: 18801991.3
(22) Date of filing: 13.02.2018
(51) Int. Cl.: F16K 31/06, F16K 7/17, F16K 31/42

(54) **PILOT-TYPE SOLENOID VALVE**

(30) Priority: 17.05.2017 JP 2017097779
(71) Applicant: SMC Corporation, Tokyo 101-0021 (JP)
(72) Inventor: ARAKAWA Takashi, Tsukubamirai-shi Ibaraki 300-2493 (JP)
(74) Representative: Keil & Schaafhausen Patentanwälte PartGmbB
(86) International application number: PCT/JP2018/004770
(87) International publication number: WO 2018/211756

(57) **Abstract**

A movable iron core (70) of a pilot-type solenoid valve (10) has a groove-like to-be-locked part (78) formed in the outer circumference thereof. A coiled coupling spring (42) for coupling the movable iron core (70) and a main valve unit (38) has: a first winding part (44) that is bent to form a polygon shape, and is elastically deformed by the movable iron core (70) being pressed in through an opening so as to lock the to-be-locked part (78); a second winding part (46) that is located on the side opposite from the first winding part (44) and secured to the main valve unit (38); and a third winding part (48) that is located between the first winding part (44) and the second winding part (46).

## Description

### Technical Field

The present invention relates to a pilot-type solenoid valve adapted to switch between flowing and blocking of a pressure fluid.

### Background Art

Conventionally, a pilot-type solenoid valve is known in which a pilot valve element is driven together with a movable iron core by energizing an electromagnetic coil, and by means of a pressure difference being generated between a pressure fluid flow path and a pressure chamber partitioned from the flow path by a main valve element such as a diaphragm or the like, the main valve element is driven in a valve opening direction.

Among such pilot-type solenoid valves, types are known that require a pressure difference, which is greater than or equal to a predetermined pressure difference (a minimum operating pressure difference), between the flow path and the pressure chamber in order to drive the main valve element in the valve opening direction, and types are known that do not necessarily require such a pressure difference. In the latter pilot-type solenoid valve mentioned above, the movable iron core and the main valve element are connected by a coupling spring, and the main valve element can be driven in the valve opening direction by being made to follow along with the displacement of the movable iron core (see Japanese Laid-Open Patent Publication No. 2011-038603).

### Summary of Invention

The shape of the coupling spring in the above-described conventional art is premised on the fact that the coupling spring is assembled by means of a manual operation being carried out between the movable iron core and the main valve element. Therefore, the skill of an operator is required in order to adjust the positioning of an end of the coupling spring by visual inspection, and to expand the spring using a finger or the like, and time is required in order to perform the assembly operation. Further, since a complex process is required such as forming a spiral groove on the surface of the movable iron core in conformity with the shape of the coupling spring, manufacturing costs are increased.

Thus, the present invention has the object of providing a pilot-type solenoid valve in which a movable iron core and a main valve element unit can be easily assembled using a coupling spring.

A pilot-type solenoid valve according to the present invention comprises a body including a flow path for a pressure fluid in an interior thereof, and a main valve seat disposed at a position facing toward the flow path, a pressure chamber connected to the body, a main valve element unit including a pilot valve port in communication with the pressure chamber and the flow path, and configured to be seated on or separated away from the main valve seat in an interior of the pressure chamber, a movable iron core in which a pilot valve element is provided and configured to be seated on or separated away from a pilot valve seat of the pilot valve port at one end portion facing toward the main valve element unit, together with including a groove-shaped engagement member formed on an outer circumference thereof, a coil shaped coupling spring connecting the movable iron core and the main valve element unit, and a solenoid unit configured to drive the movable iron core, wherein the coupling spring further comprises a first winding part which is formed by being bent in a polygonal shape, is elastically deformed by the movable iron core being pressed therein from an opening portion thereof, and engages with the engagement member, a second winding part positioned on an opposite side from the first winding part, and which is fixed to the main valve element unit, and a third winding part positioned between the first winding part and the second winding part.

In accordance with the pilot-type solenoid valve of the present invention, the movable iron core and the main valve element unit can be easily assembled using the coupling spring. More specifically, by the first winding part of the coupling spring being formed in a polygonal shape, in a state in which one end part (the second winding part) of the coupling spring is fixed to the main valve element unit, the movable iron core can be assembled simply by being lightly press-fitted from the other end part (the first winding part). Therefore, automated assembly is made possible, and even in the case that operations are performed by an individual, specialized skill of an operator is not required. Further, after assembly thereof, in an environment of normal usage, the coupling spring does not become separated away from the movable iron core and the main valve element unit. Furthermore, since only the first winding part of the coupling spring is elastically deformed at the time of assembly, assembly can be performed without applying an excessive load with respect to the coupling spring.

Further, in the pilot-type solenoid valve according to the present invention, the first winding part is preferably formed by being bent in a triangular shape. Since the number of bent portions is small and the configuration is simple, an advantage is brought about in that formation thereof is easier in comparison with other polygonal shapes.

Further, in the pilot-type solenoid valve according to the present invention, a diameter of the movable iron core at a position of the engagement member is preferably less than or equal to a diameter of an inscribed circle in the opening portion of the first winding part. In accordance with this feature, when the movable iron core is press-fitted and assembled with respect to the coupling spring, the first winding part can be returned to its original shape, and therefore, the shape and capability of the coupling spring can be maintained.

Further, in the pilot-type solenoid valve according to the present invention, a diameter of a circumscribed circle of the first winding part is preferably greater than an outer diameter of the third winding part, and a diameter of an inscribed circle in the opening portion of the first winding part is preferably less than an inner diameter of the third winding part. In accordance with this feature, since the first winding part is supported by the third winding part when the movable iron core is press-fitted, collapsing and excessive deformation of the first winding part can be prevented.

Further, in the pilot-type solenoid valve according to the present invention, on a press-fitted portion of the movable iron core, a diameter of an adjacent portion thereof adjacent to the engagement member is preferably greater than a diameter of the engagement member, and the press-fitted portion preferably comprises an umbrella member which is smaller in diameter than the adjacent portion, and is formed in a tapered shape tapering toward the main valve element unit. In accordance with such features, when the movable iron core is press-fitted and assembled with respect to the coupling spring, since the first winding part is gradually deformed in accordance with the tapered shape of the umbrella member, assembly is further facilitated.

Further, in the pilot-type solenoid valve according to the present invention, a diameter of a distal end part of the umbrella member is preferably less than or equal to a diameter of an inscribed circle in the opening portion of the first winding part. In accordance with this feature, when the movable iron core is press-fitted and assembled with respect to the coupling spring, since the distal end part of the umbrella member is accommodated in the opening portion of the first winding part, the position of the movable iron core can be regulated, and accuracy of the assembly is enhanced.

Further, in the pilot-type solenoid valve according to the present invention, the main valve element unit preferably further comprises a diaphragm configured to be seated on or separated away from the main valve seat, a retaining plate mounted on the diaphragm and configured to retain the second winding part, an orifice member in which the pilot valve seat is formed at one end thereof and the pilot valve port is formed along a central axis, the orifice member being inserted into openings of the diaphragm and the retaining plate, and a fixing member attached to an outer circumference of the orifice member on a bottom surface side of the diaphragm, and configured to fix the diaphragm, the retaining plate, and the second winding part by being sandwiched between the fixing member and the orifice member. In accordance with such features, when the main valve element unit is assembled, the coupling spring can be assembled simultaneously therewith.

According to the present invention, a pilot-type solenoid valve can be provided in which the movable iron core and the main valve element unit can be easily assembled using the coupling spring.

The above and other objects, features, and advantages of the present invention will become more apparent from the following description when taken in conjunction with the accompanying drawings, in which preferred embodiments of the present invention are shown by way of illustrative example.

### Brief Description of Drawings

FIG. 1 is a longitudinal cross-sectional view of a pilot-type solenoid valve according to a present embodiment;
FIG. 2 is a plan view of a coupling spring shown in FIG. 1;
FIG. 3 is a front view of the coupling spring shown in FIG. 1;
FIG. 4 is a plan view showing a state in which the coupling spring is assembled with respect to a main valve element unit shown in FIG. 1;
FIG. 5 is a perspective view showing a state prior to the movable iron core unit being assembled with respect to the main valve element unit and the coupling spring shown in FIG. 4;
FIG. 6 is a cross-sectional view taken along line VI-VI shown in FIG. 5;
FIG. 7 is a front view showing a state in which the movable iron core unit is assembled with respect to the main valve element unit and the coupling spring shown in FIG. 4; and
FIG. 8 is a cross-sectional view taken along line VIII-VIII shown in FIG. 7.

### Description of Embodiments

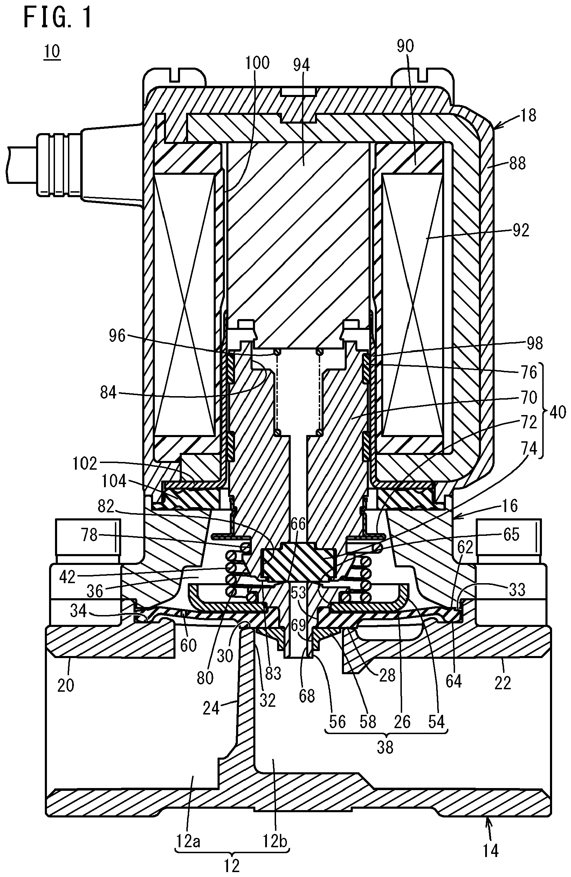

Preferred embodiments of a pilot-type solenoid valve according to the present invention will be presented and described in detail below with reference to the accompanying drawings. It should be noted that, when the terms "upper", "lower", "left", and "right" are referred to below, the orientations shown in FIG. 1 are indicated.

FIG. 1 is a longitudinal cross-sectional view of a pilot-type solenoid valve 10 according to the present embodiment. As shown in FIG. 1, the pilot-type solenoid valve 10 includes a body 14 having a flow path 12 for a pressure fluid (for example, water, air, oil, etc.) in the interior thereof, a cabinet 16 disposed contiguously above the body 14, and a solenoid unit 18 disposed contiguously above the cabinet 16.

The body 14, for example, is formed from a metal material. A first port 20 for introducing the pressure fluid, and a second port 22 for delivering out the pressure fluid are provided on both left and right ends of the body 14.

A partition wall 24 is disposed in the center of the body 14, and the flow path 12 for the pressure fluid is partitioned into a first flow path 12a that communicates with the first port 20, and a second flow path 12b that communicates with the second port 22. A main valve seat 30 is provided on an upper end part of the partition wall 24. A boss member 28, which is disposed on a lower side surface of a diaphragm 26 that serves as a main valve element, is seated on or separated away from the main valve seat 30. A main valve port 32 is formed in upper and lower directions (in a vertical direction) in the main valve seat 30. A diaphragm retaining member 34 that retains an outer edge portion 33 of the diaphragm 26 is formed as an annular groove on an upper side surface of the body 14.

The cabinet 16, for example, is formed from a metal material. A pressure chamber 36 is disposed in the interior of the cabinet 16. A main valve element unit 38 including the diaphragm 26, and a portion of a movable iron core unit 40 are accommodated in the interior of the pressure chamber 36. The main valve element unit 38 and the movable iron core unit 40 are integrally connected via a coupling spring 42. The coupling spring 42, for example, is formed from a metal material.

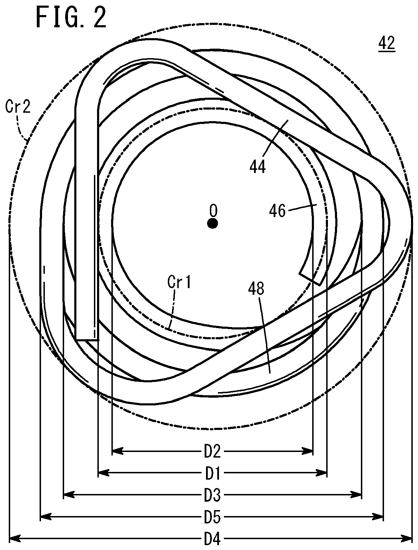

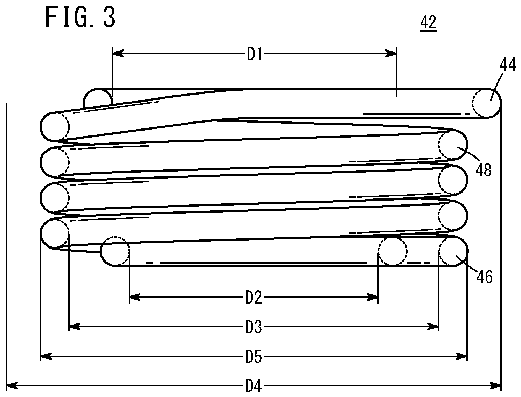

FIG. 2 and FIG. 3 are a plan view and a front view of the coupling spring 42 shown in FIG. 1. As shown in FIG. 2 and FIG. 3, the coupling spring 42 is constituted in a coil shape from a substantially triangular first winding part 44, a substantially circular second winding part 46 disposed on the opposite side from the first winding part 44, and a third winding part 48 positioned between the first winding part 44 and the second winding part 46. In any of the first winding part 44, the second winding part 46, and the third winding part 48, the point O is defined as the center point thereof. Further, as shown in FIG. 3, the first winding part 44 and the second winding part 46 are formed in a manner so that the upper and lower end surfaces thereof are parallel to each other when viewed from the side. The third winding part 48 is formed in a spiral shape.

Further, a diameter D1 of a virtual inscribed circle Cr1 in the opening portion of the first winding part 44 (refer to the one-dot-dashed line in FIG. 2), and an inner diameter D2 of the second winding part 46 are both smaller than an inner diameter D3 of the third winding part 48. Thus, in the case that one end part of the movable iron core unit 40 is press-fitted (inserted) into the interior of the coupling spring 42 in a state of being separated away from the inner circumferential surface of the third winding part 48, a maximum diameter of the press-fitted portion (an umbrella member 80 of a movable iron core 70, to be described later) is made smaller than the inner diameter D3 of the third winding part 48.

Further, a diameter D4 of a circumscribed circle Cr2 (refer to the one-dot-dashed line in FIG. 2) of the first winding part 44 is greater than an outer diameter D5 of the third winding part 48, and a diameter D1 of the inscribed circle Cr1 is less than an inner diameter D3 of the third winding part 48. In accordance with this feature, since the first winding part 44 is supported by the third winding part 48 when the movable iron core unit 40 is press-fitted, collapsing and excessive deformation of the first winding part 44 can be prevented.

Further, according to the present embodiment, one end portion of the movable iron core unit 40 is press-fitted from the side of the first winding part 44, and the first winding part 44 engages in a groove-shaped engagement member (a groove section 78 of the movable iron core 70, to be described later) which is disposed adjacent to the press-fitted portion, and therefore, the diameter of the engagement member is set to be less than or equal to the diameter D1 of the inscribed circle Cr1. Consequently, in a state in which it is returned to its original shape, the first winding part 44 is capable of being engaged with the engagement member. Further, by the maximum diameter of the press-fitted portion being made greater than the diameter D1 of the inscribed circle Cr1, in an environment of normal usage, it is possible to prevent the press-fitted portion from becoming disengaged from the coupling spring 42.

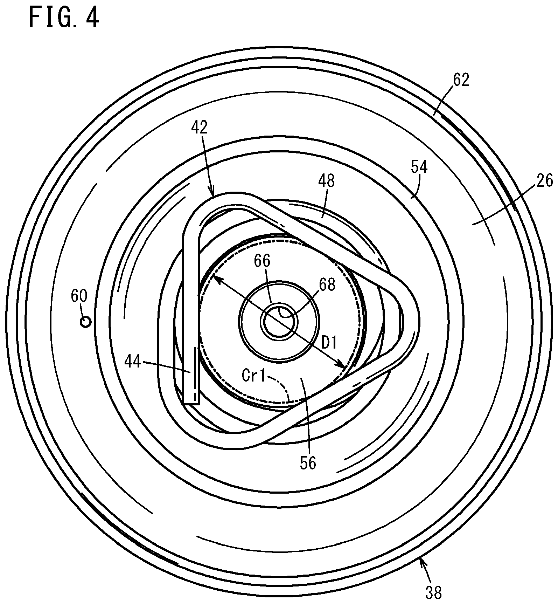

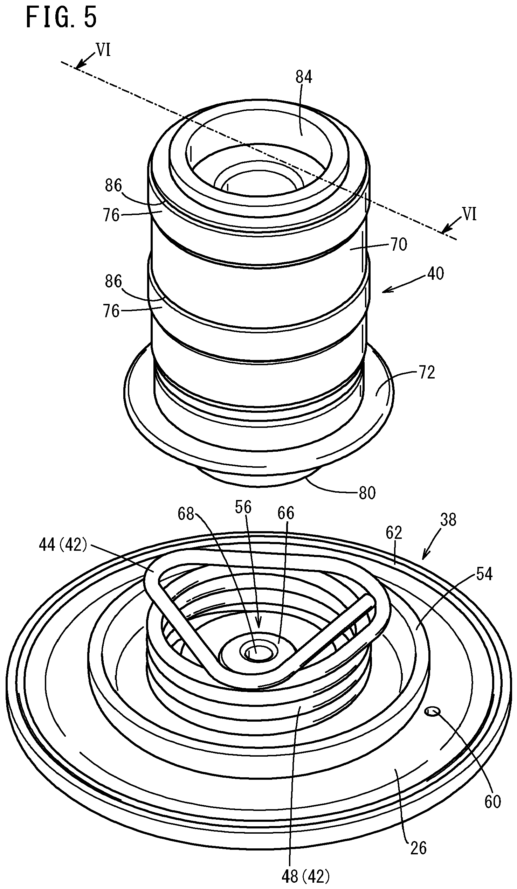

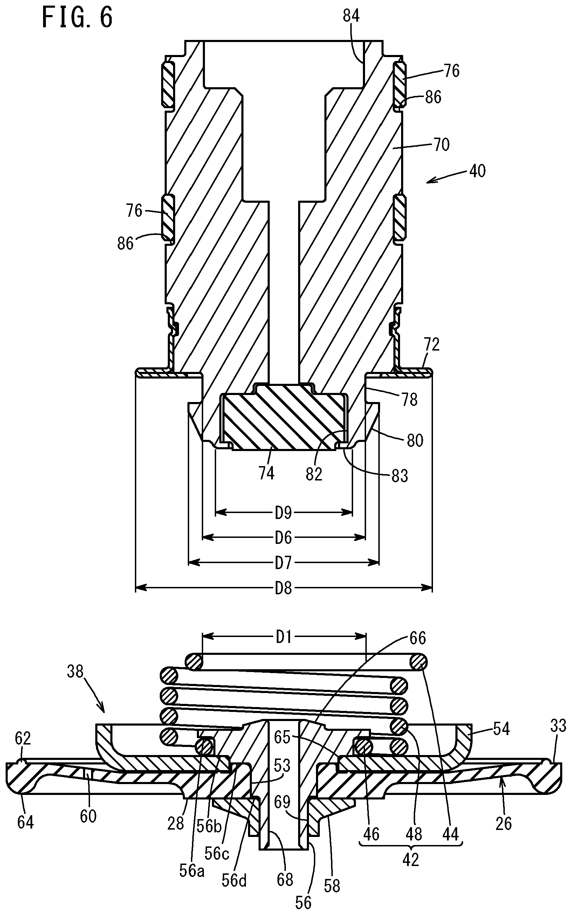

Next, the structures of the main valve element unit 38 and the movable iron core unit 40 will be described in detail with reference to FIGS. 1 and FIGS. 4 to 6. FIG. 4 is a plan view showing a state in which the coupling spring 42 is assembled with respect to the main valve element unit 38 shown in FIG. 1, and FIG. 5 is a perspective view showing a state prior to the movable iron core unit 40 being assembled with respect to the main valve element unit 38 and the coupling spring 42 shown in FIG. 4. Further, FIG. 6 is a cross-sectional view taken along line VI-VI shown in FIG. 5. Among the characters indicative of the diameters of the respective components in FIG. 6, reference characters which are common to those in FIG. 2 indicate the diameters of the same components.

As shown in FIG. 1, the main valve element unit 38 includes the diaphragm 26, a retaining plate 54, an orifice member 56, and a fixing member 58. Further, as shown in FIG. 4, the coupling spring 42 is assembled in advance with respect to the main valve element unit 38.

The diaphragm 26 is formed in a disk-like shape from an elastic material such as rubber or the like. An opening 53 is provided in the center of the diaphragm 26, and the orifice member 56 is inserted in the opening 53. Further, a communication hole 60 which enables communication between the first flow path 12a and the pressure chamber 36 is provided on a more outward side than the opening 53 in the radial direction. Accordingly, when the diaphragm 26 is mounted on the body 14 (the diaphragm retaining member 34), the communication hole 60 is disposed in facing relation to the first flow path 12a. An annular first convex portion 62 is formed on an upper surface side on the outer edge portion 33 of the diaphragm 26. In accordance with the shape of the diaphragm retaining member 34, an annular second convex portion 64 is formed on a bottom surface side on the outer edge portion 33 of the diaphragm 26. Further, as shown in FIG. 1, the first convex portion 62 is in contact with a lower end part of the cabinet 16, and the second convex portion 64 is in contact with the diaphragm retaining member 34, respectively, whereby the location between the pressure chamber 36 and the flow path 12 is sealed.

The retaining plate 54 is formed, for example, in a round dish-like shape from a metal material. An opening 65 is provided in the center of the retaining plate 54, and the orifice member 56 is inserted in the opening 65. The retaining plate 54 is mounted on the diaphragm 26, and retains the second winding part 46 of the coupling spring 42.

The orifice member 56, for example, is formed from a metal material. A pilot valve seat 66 is disposed on an upper end surface of the orifice member 56. A pilot valve port 68 is formed in the center of the pilot valve seat 66 along a central axis of the orifice member 56. Further, as shown in FIG. 6, four stepped portions 56a to 56d are provided on a bottom surface side of the orifice member 56. The stepped portion 56a is formed in accordance with the height of the second winding part 46 of the coupling spring 42 which is the object to be fixed. The stepped portions 56b to 56d are formed in accordance with the shapes of the openings of the retaining plate 54, the diaphragm 26, and the fixing member 58, respectively.

The fixing member 58, for example, is formed from a metal material. An opening 69 is provided in the center of the fixing member 58, and the orifice member 56 is inserted in the opening 69. The fixing member 58 is attached to the outer circumference of the orifice member 56 and the stepped portion 56d on the bottom surface side of the diaphragm 26, whereby the diaphragm 26, the retaining plate 54, and the second winding part 46 of the coupling spring 42 are fixed by being sandwiched between the fixing member 58 and the orifice member 56. Moreover, although illustration thereof is omitted, the fixing member 58 and the orifice member 56 are fixed by caulking, for example.

Further, as shown in FIG. 6, the movable iron core unit 40 includes the movable iron core 70, a flange 72, a pilot valve element 74, and rings 76. The movable iron core 70, for example, is formed in a substantially cylindrical shape from a magnetic material. The flange 72 is bent in an outward direction at the lower end side, and then is bent in an inward direction at an outer peripheral end thereof, and is disposed so as to surround an outer circumferential portion of the movable iron core 70.

A groove section 78 and an umbrella member 80 are provided on a lower end side of the movable iron core 70. The groove section 78 lies downwardly adjacent to the flange 72, and is disposed in the form of an annular groove between the flange 72 and the umbrella member 80. Further, one end part of the umbrella member 80 lies downwardly adjacent to the groove section 78, and the other end part thereof is formed in a tapered shape tapering gradually from the one end part toward the main valve element unit 38. As shown in FIG. 6, a diameter D6 of the movable iron core 70 at the bottom of the groove section 78 is less than a maximum diameter D7 of the umbrella member 80 and a diameter D8 of the flange 72. Further, according to the present embodiment, the diameter D6 of the movable iron core 70 at the bottom of the groove section 78 is set to be less than or equal to the diameter D1 of the inscribed circle Cr1 in the first winding part 44 of the coupling spring 42 prior to the assembly thereof in the manner described above. Accordingly, due to press-fitting thereof, when the umbrella member 80 passes through the opening portion of the first winding part 44, the first winding part 44 returns to its original state, and a portion of the first winding part 44 is accommodated and placed in an engaged state in the interior of the groove section 78. Further, within the umbrella member 80, the diameter D9 of the distal end part thereof is the smallest, and the diameter D9 is set to be less than or equal to the diameter D1 of the inscribed circle Cr1. Consequently, when the movable iron core 70 is press-fitted and assembled with respect to the coupling spring 42, since the minimum diameter part (distal end part) of the umbrella member 80 is placed in a state of being accommodated and stably set in the opening portion of the first winding part 44, the position of the movable iron core 70 can be regulated, and press-fitting thereof is facilitated.

The pilot valve element 74 is formed in a substantially cylindrical shape by an elastic material such as rubber or the like. The pilot valve element 74, by being accommodated in a valve element accommodating section 82 that is disposed on a lower side of the movable iron core 70, is secured integrally within the movable iron core 70. Further, a claw member 83, which is bent inwardly in the radial direction, is formed at the lower end part of the umbrella member 80, whereby the pilot valve element 74 is prevented from becoming disengaged from the valve element accommodating section 82.

Further, a spring accommodating section 84 in which a later-described return spring 96 is accommodated is provided on an upper side of the movable iron core 70, and annular grooves 86 in which the rings 76 are mounted are provided at two vertical positions on the outer circumferential side of the movable iron core 70. The rings 76, for example, are made of a resin material. The movable iron core 70 slides via the rings 76 in upward and downward directions (in a vertical direction) in an internal space of the solenoid unit 18.

Next, a description will be given in detail with reference to FIG. 1 concerning the solenoid unit 18 that drives the movable iron core 70. In addition to the above-described movable iron core unit 40, the solenoid unit 18 includes a housing 88, a bobbin 90, an electromagnetic coil 92, a fixed iron core 94, and the return spring 96.

The housing 88, for example, is formed from a metal material, and is connected to the cabinet 16 by non-illustrated bolts or the like. The bobbin 90, for example, is formed from a resin material. The electromagnetic coil 92, which is capable of being energized by an exciting current, is wound around an outer peripheral portion of the bobbin 90. In a central portion of the bobbin 90, an opening 100 is formed which accommodates the fixed iron core 94 on an upper side together with accommodating the movable iron core 70 on a lower side via a sleeve 98. One end side of the sleeve 98 is formed in a cylindrical shape with a constant diameter, and is arranged on the side of the fixed iron core 94. Further, a flange 102, the diameter of which expands outwardly in a radial direction compared with the one end side, is formed at the other end of the sleeve 98. The sleeve 98 is retained via the flange 102 in an annular stopper 104 which is disposed on an upper end part of the cabinet 16. The stopper 104 is formed from an elastic material such as rubber or the like.

The fixed iron core 94 is formed in a substantially cylindrical shape from a metal material. When the fixed iron core 94 is excited by the electromagnetic coil 92, the movable iron core 70 is attracted in an upward direction. When the movable iron core 70 is attracted, the flange 72 of the movable iron core 70 comes into contact with the stopper 104, and further upward displacement thereof is restricted. Further, the stopper 104 suitably absorbs any impact when it comes into abutment against the flange 72 of the movable iron core 70.

The return spring 96 is accommodated in the spring accommodating section 84 of the movable iron core 70. An upper end part of the return spring 96 urges the fixed iron core 94, and the lower end part thereof urges the movable iron core 70 in a downward direction. More specifically, the return spring 96 urges the pilot valve element 74 in a direction (valve closing direction) in which the pilot valve element 74 becomes seated with respect to the pilot valve seat 66. Further, because the pilot valve seat 66 is a constituent component of the main valve element unit 38, the return spring 96 urges the diaphragm 26 (main valve element) that constitutes the main valve element unit 38 in a closing direction with respect to the main valve seat 30.

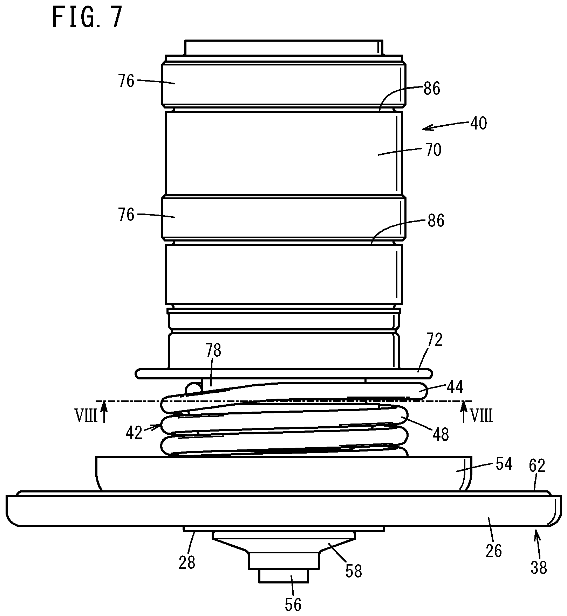

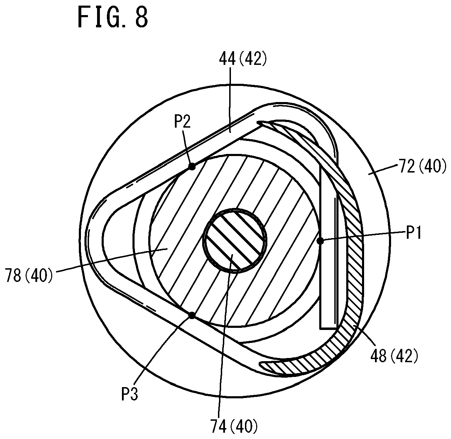

Next, with reference to FIGS. 4 to 8, a description will be given concerning a method of assembling the main valve element unit 38, the movable iron core unit 40, and the coupling spring 42. FIG. 7 is a front view showing a state in which the movable iron core unit 40 is assembled with respect to the main valve element unit 38 and the coupling spring 42 shown in FIG. 4, and FIG. 8 is a cross-sectional view taken along line VIII-VIII shown in FIG. 7.

First, the retaining plate 54 is mounted on the diaphragm 26, together with the second winding part 46 of the coupling spring 42 being mounted on the retaining plate 54. At this time, the center points of the diaphragm 26, the retaining plate 54, and the coupling spring 42 are set so as to be aligned on the same axis.

Next, the orifice member 56 is inserted from the opening portion of the first winding part 44 of the coupling spring 42, and the stepped portions 56a to 56c of the orifice member 56 are attached respectively to the second winding part 46, the opening 65 of the retaining plate 54, and the opening 53 of the diaphragm 26.

Next, the opening 69 of the fixing member 58 is attached to the stepped portion 56d of the orifice member 56 that projects toward the bottom surface side of the diaphragm 26, and the retaining plate 54, the diaphragm 26, and the second winding part 46 of the coupling spring 42 are fixed by being sandwiched between the fixing member 58 and the orifice member 56. Consequently, the coupling spring 42 is assembled simultaneously with the four components that constitute the main valve element unit 38.

In addition, as shown in FIG. 5, after the movable iron core unit 40 has been disposed in the face-to-face relation thereto on the axial line upwardly of the main valve element unit 38, when the entirety of the movable iron core unit 40 is lightly press-fitted from the side of the first winding part 44 of the coupling spring 42, the first winding part 44 is gradually elastically deformed, and expands radially outward along the tapered shape of the umbrella member 80 of the movable iron core 70. When the umbrella member 80 passes through the opening portion of the first winding part 44, the first winding part 44 is elastically deformed and thereby returns to its original shape, and engages within the groove section 78 (engagement member) that lies adjacent to the umbrella member 80. At this time, the first winding part 44 grips the groove section 78 of the movable iron core 70 at the locations of the three points P1 to P3 shown in FIG. 8. Consequently, the assembly of the main valve element unit 38 and the movable iron core unit 40 using the coupling spring 42 is completed. Moreover, in the case that the diameter of the movable iron core 70 at the bottom of the groove section 78 is less than the diameter D1 of the inscribed circle Cr1 of the first winding part 44 shown in FIG. 2, and in the case of being greater than or equal to the diameter D1 of the inscribed circle Cr1 of the first winding part 44 in a state in which the portions of the first winding part 44 at the points P1 to P3 are separated away from the bottom of the groove section 78, the portions at the points P1 to P3 are placed in a state of abutment against the bottom of the groove section 78.

Next, a description will be given concerning operations and effects of the pilot-type solenoid valve 10 in which the main valve element unit 38 and the movable iron core unit 40 are assembled using the coupling spring 42 in the manner described above.

At a time of non-energization, the pressure fluid introduced from the first port 20 to the side of the first flow path 12a passes through the communication hole 60, and fills the interior of the pressure chamber 36. Moreover, by the pressure of the pressure fluid that is filled in the interior of the pressure chamber 36 and the elastic force of the return spring 96, the main valve port 32 is closed.

When the electromagnetic coil 92 is energized, the fixed iron core 94 becomes excited, and the movable iron core 70 is attracted in an upward direction. Consequently, the pilot valve element 74 that is incorporated in the distal end part of the movable iron core 70 separates away from the pilot valve seat 66, and the pilot valve port 68 is opened. In addition, the pressure fluid that is filled in the pressure chamber 36 flows through the pilot valve port 68 into the second flow path 12b and to the side of the second port 22.

Upon continued energization of the electromagnetic coil 92, the pressure in the pressure chamber 36 gradually decreases by the pressure fluid being released from the pilot valve port 68 into the second flow path 12b. Consequently, the force that presses downwardly on the diaphragm 26 constituting the main valve element unit 38 is also weakened. In addition, when the force pressing upwardly on the diaphragm 26 surpasses the downward force, the diaphragm 26 separates away from the main valve seat 30, and the main valve port 32 is opened. Moreover, even in the case that the pressure is zero, or there is a very low pressure state on the side of the first flow path 12a, and the difference in pressure between the first flow path 12a and the pressure chamber 36 is small, due to the elastic force of the coupling spring 42, the diaphragm 26 separates away from the main valve seat 30, and the main valve port 32 can be opened.

In this manner, in accordance with the pilot-type solenoid valve 10 according to the present embodiment, the movable iron core 70 (the movable iron core unit 40) and the main valve element unit 38 can be easily assembled using the coupling spring 42. More specifically, the movable iron core unit 40 can be assembled simply by being lightly press-fitted from the other end side (the first winding part 44) of the coupling spring 42 while the one end side (the second winding part 46) of the coupling spring 42 is connected to the main valve element unit 38. Stated otherwise, the coupling spring 42 is of a shape that enables automated assembly, and even in the case that operations are performed by an individual, specialized skill of an operator is not required. In addition, after assembly thereof, in an environment of normal usage, the coupling spring 42 does not become separated away from the movable iron core unit 40 and the main valve element unit 38. Furthermore, since only the first winding part 44 of the coupling spring 42 is elastically deformed at the time of assembly, assembly can be performed without needlessly applying an excessive load to the coupling spring 42.

Furthermore, since only the first winding part 44 of the coupling spring 42 is elastically deformed at the time of assembly, it is not necessary to apply an excessive load to the coupling spring 42, and the capability of the coupling spring 42 can be maintained. Further, the first winding part 44 is formed by being bent in a triangular shape. More specifically, since the number of bent portions is small, an advantage is brought about in that formation thereof is easier in comparison with other polygonal shapes.

It is a matter of course that the pilot-type solenoid valve according to the present invention is not limited to the above-described embodiments, and various additional or modified configurations could be adopted therein without departing from the essence and gist of the present invention. For example, the present invention can be modified in the following manner.

In the above-described embodiment, a case has been illustrated in which the first winding part 44 of the coupling spring 42 is formed in a triangular shape. However, the shape of the first winding part 44 is not limited to such a shape, and may be another polygonal shape such as a quadrangular shape or the like. In this case, the shape can be appropriately changed in accordance with the shape of the movable iron core 70 that is press-fitted with respect to the first winding part 44.

In the above-described embodiment, a case has been illustrated in which the second winding part 46 of the coupling spring 42 is formed in a substantially circular shape with a small diameter that is smaller than the third winding part 48. However, the second winding part 46 may be formed with the same size and shape as the first winding part 44. In this case, on the side of the main valve element unit 38, in the same manner as on the side of the movable iron core 70, an engagement structure that conforms to the shape of the second winding part 46 is provided, for example, on the side of the retaining plate 54, whereby it becomes possible for the second winding part 46 of the coupling spring 42 to be assembled afterwards with respect to the assembled main valve element unit 38.

In the embodiment described above, as shown in FIG. 6, etc., a case has been illustrated in which the diameter D6 of the movable iron core 70 in the groove section 78 is less than or equal to the diameter D1 of the inscribed circle Cr1 of the first winding part 44. However, the diameter D6 of the movable iron core 70 in the groove section 78 can be made greater than the diameter D1 of the inscribed circle Cr1. In this case, in a state of being engaged in the groove section 78 of the movable iron core 70, although the first winding part 44 is slightly expanded more so than in its initial state, since the first winding part 44 is fixed by gripping into the groove section 78 due to the elastic force thereof, the first winding part can be securely fixed in place.

## Claims

1. A pilot-type solenoid valve (10), comprising:
a body (14) including a flow path (12) for a pressure fluid in an interior thereof, and a main valve seat (30) disposed at a position facing toward the flow path (12);
a pressure chamber (36) connected to the body (14);
a main valve element unit (38) including a pilot valve port (68) in communication with the pressure chamber (36) and the flow path (12), and configured to be seated on or separated away from the main valve seat (30) in an interior of the pressure chamber (36);
a movable iron core (70) in which a pilot valve element (74) is provided and configured to be seated on or separated away from a pilot valve seat (66) of the pilot valve port (68) at one end portion facing toward the main valve element unit (38), together with including a groove-shaped engagement member (78) formed on an outer circumference thereof;
a coil shaped coupling spring (42) connecting the movable iron core (70) and the main valve element unit (38); and
a solenoid unit (18) configured to drive the movable iron core (70);
wherein the coupling spring (42) comprises:
a first winding part (44) which is formed by being bent in a polygonal shape, is elastically deformed by the movable iron core (70) being pressed therein from an opening portion thereof, and engages with the engagement member (78);
a second winding part (46) positioned on an opposite side from the first winding part (44), and which is fixed to the main valve element unit (38); and
a third winding part (48) positioned between the first winding part (44) and the second winding part (46).

2. The pilot-type solenoid valve (10) according to claim 1, wherein the first winding part (44) is formed by being bent in a triangular shape.

3. The pilot-type solenoid valve (10) according to claim 1, wherein a diameter (D6) of the movable iron core (70) at a position of the engagement member (78) is less than or equal to a diameter (D1) of an inscribed circle (Cr1) in the opening portion of the first winding part (44).

4. The pilot-type solenoid valve (10) according to claim 1, wherein a diameter (D4) of a circumscribed circle (Cr2) of the first winding part (44) is greater than an outer diameter (D5) of the third winding part (48), and a diameter (D1) of an inscribed circle (Cr1) in the opening portion of the first winding part (44) is less than an inner diameter (D3) of the third winding part (48).

5. The pilot-type solenoid valve (10) according to claim 1, wherein on a press-fitted portion of the movable iron core (70), a diameter (D7) of an adjacent portion thereof adjacent to the engagement member (78) is greater than a diameter (D6) of the engagement member (78), and the press-fitted portion comprises an umbrella member (80) which is smaller in diameter than the adjacent portion, and is formed in a tapered shape tapering toward the main valve element unit (38).

6. The pilot-type solenoid valve (10) according to claim 5, wherein a diameter (D9) of a distal end part of the umbrella member (80) is less than or equal to a diameter (D1) of an inscribed circle (Cr1) in the opening portion of the first winding part (44).

7. The pilot-type solenoid valve (10) according to any one of claims 1 to 6, wherein the main valve element unit (38) further comprises:
a diaphragm (26) configured to be seated on or separated away from the main valve seat (30);
a retaining plate (54) mounted on the diaphragm (26) and configured to retain the second winding part (46);
an orifice member (56) in which the pilot valve seat (66) is formed at one end thereof and the pilot valve port (68) is formed along a central axis, the orifice member (56) being inserted into openings of the diaphragm (26) and the retaining plate (54); and
a fixing member (58) attached to an outer circumference of the orifice member (56) on a bottom surface side of the diaphragm (26), and configured to fix the diaphragm (26), the retaining plate (54), and the second winding part (46) by being sandwiched between the fixing member (58) and the orifice member (56).
